# EUROPEAN PATENT APPLICATION

(11) **EP 1 703 513 A1**
(43) Date of publication of application: **20.09.2006**
(21) Application number: 05090067.9
(22) Date of filing: 15.03.2005
(51) Int. Cl.: G11B 27/034, G11B 27/10

(54) **Method and apparatus for encoding plural video signals as a single encoded video signal, method and and apparatus for decoding such an encoded video signal**

(71) Applicant: DEUTSCHE THOMSON-BRANDT GMBH, 78048 Villingen-Schwenningen (DE)
(72) Inventor: Herpel, Carsten, 30974 Wennigsen (DE); Adolph, Dirk, 30952 Ronnenberg (DE); Hörentrup, Jobst, 30163 Hannover (DE); Ostermann, Ralf, 30657 Hannover (DE); Janssen, Uwe, 30926 Seelze (DE); Peters, Hartmut, 30890 Barsinghausen (DE); Schewzow, Andrej, 30163 Hannover (DE); Winter, Marco, 30173 Hannover (DE)
(74) Representative: Hartnack, Wolfgang

(57) **Abstract**

There are DVD discs that provide a recorded video sequence with different viewing angles. However, because it takes some time to start decoding of an encoded video sequence and the different angle views each relate to corresponding differently encoded video streams, such switching causes a delayed response to a user's angle change request. It is proposed that the original video resolution is reduced in favour of fast response time to video angle change requests. The available pixels within a video frame are used to store two or more video signals side by side, each one representing a different viewing angle, but the full picture area video signal is anyway decoded. The selected viewing angle video signal is re-scaled to full-size presentation.

## Description

The invention relates to a method and to an apparatus for encoding pictures of one or more video signals as a single encoded video signal, and to a method and an apparatus for decoding an encoded video signal that represents one or more video signals.

### Background

There are storage media, e.g. DVD optical discs, that allow to view a recorded video sequence with different viewing angles, i.e. to view different camera signal source pictures. Normally, DVD multi-angle video requires switching of encoded video streams each time the angle is changed.

JP-A-11-55589 shows presentation of two multi-angle pictures on a two-screen display using a separate video decoder for each partial video signal.

### Invention

However, because it takes some time to start decoding of an encoded video sequence and the different angle views each relate to corresponding differently encoded video streams, such switching inevitably causes a delayed response to a user's angle change request. As an example, when the user in a soccer game watches a situation that might lead to a goal and he wants to switch to the goal camera in a conventional DVD recording, that goal might already be scored by the time the angle has been changed and decoding and presentation of the new video sequence has started.

A problem to be solved by the invention is to facilitate fast switching between different viewing angles of encoded video on a pre-recorded storage medium. This problem is solved by the method disclosed in claims 1 and 3. An apparatus that utilises this method is disclosed in claims 2 and 4.

According to the invention, the original video resolution is reduced in favour of fast response time to video angle change requests. The available pixels within a video frame or field are used to store two or more video signals side by side, each one representing a different viewing angle, but the full picture area video signal is anyway decoded. For example, a picture area having 1920 horizontal and 1080 vertical luminance pixels is split into two adjacent areas and signals having 960*1080 pixels each, or is split into four areas and signals having 960*540 pixels each.
Side information for the resulting encoded video stream identifies if the stream indeed conveys more than one video signal, and which one of the video signals to display by default. Normally, only one of the identified different viewing angle video signals is displayed, after upscaling to full-screen resolution.
If there is no different viewing angle video signal the main video signal occupies the full-screen pixels. From that time instant on where one or more different viewing angle video signals for the video sequence are recorded on the storage medium, or are broadcast from a transmitter, preferably automatically the main video signal part is interpolated or upscaled to full-screen size by the player or the receiver, respectively. In case the number of simultaneous different viewing angle video signals for the video sequence changes the degree of interpolation or upscaling is adapted accordingly preferably automatically. If there is no more a parallel different viewing angle video signal, preferably automatically the main video signal again occupies the full-screen pixels and thus provides the full resolution.

The usual delay involved in switching between viewing angles on a multi-angle DVD title is completely avoided, since display of another angle just involves displaying another area of the already decoded video signal.
The inventive solution is limited to few viewing angles in order to maintain an acceptable video resolution. However, there are video content types such as recordings of cultural events or sports where fast switching between different views is of higher importance to users than the related video resolution.

In principle, the inventive encoding method is suited for encoding pictures of one or more video signals, including the steps:
- if more than one video signal is to be encoded per total picture area, splitting the total picture area to be encoded into a corresponding number of sub areas and assigning to each one of said sub areas a different one of said video signals;
- encoding the one or more video signals as a single video signal, whereby the resulting code includes data items which signal that the commonly encoded video signal contains one or more video signals, and which signal how many video signals are contained in said commonly encoded video signal.

In principle the inventive encoding apparatus is suited for encoding pictures of one or more video signals, said apparatus including:
- means being adapted for splitting the total picture area to be encoded into a corresponding number of sub areas and for assigning to each one of said sub areas a different one of said video signals, if more than one video signal is to be encoded per total picture area;
- means being adapted for encoding the one or more video signals as a single video signal, whereby the resulting code includes data items which signal that the commonly encoded video signal contains one or more video signals, and which signal how many video signals are contained in said commonly encoded video signal.

In principle, the inventive decoding method is suited for decoding an encoded video signal that represents one or more video signals, including the steps:
- decoding pictures of said encoded video signal whereby, if more than one video signal was encoded per total picture area, prior to the encoding the total picture area was split into a corresponding number of sub areas and to each one of said sub areas a different one of said video signals was assigned and the one or more video signals were encoded as a single video signal, whereby the code of said encoded video signal includes data items which signal that the commonly encoded video signal contains one or more video signals, and which signal how many video signals are contained in said commonly encoded video signal;
- selecting one of said one or more video signals that is related to one of said sub areas;
- outputting the selected decoded video signal.

In principle the inventive decoding apparatus is suited for decoding an encoded video signal that represents one or more video signals, said apparatus including:
- means being adapted for decoding pictures of said encoded video signal whereby, if more than one video signal was encoded per total picture area, prior to the encoding the total picture area was split into a corresponding number of sub areas and to each one of said sub areas a different one of said video signals was assigned and the one or more video signals were encoded as a single video signal, whereby the code of said encoded video signal includes data items which signal that the commonly encoded video signal contains one or more video signals, and which signal how many video signals are contained in said commonly encoded video signal;
- means being adapted for selecting one of said one or more video signals that is related to one of said sub areas, said selecting means outputting the selected decoded video signal.

Advantageous additional embodiments of the invention are disclosed in the respective dependent claims.

### Drawings

Exemplary embodiments of the invention are described with reference to the accompanying drawings, which show in:
- Fig. 1: logical split of a video window;
- Fig. 2: block diagram of an inventive disc player;
- Fig. 3: block diagram of an inventive encoder.

### Exemplary embodiments

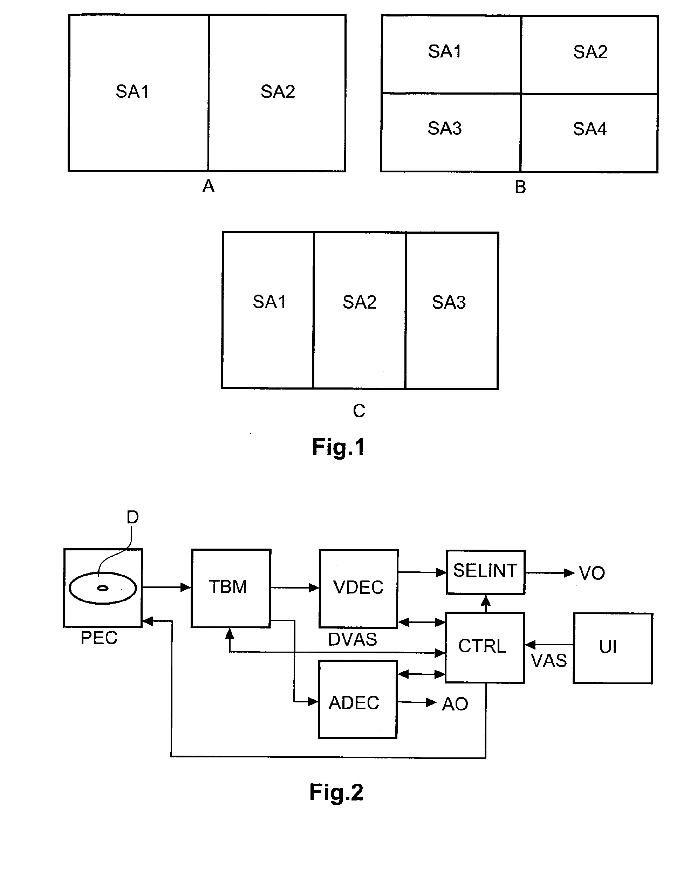

Fig. 1 shows a picture area representing 1920 horizontal and 1080 vertical luminance pixels that is split into two, three or four adjacent areas. The luminance pixel values are accompanied by corresponding chrominance pixel values. Each area represents the pixels for a corresponding viewing angle video signal. In Fig. 1A the original picture area is split into two areas having 960*1080 pixels each, in Fig. 1B into three areas having 640*1080 pixels each, and in Fig. 1C into four areas having 960*540 pixels each. Other area forms or sizes are possible and can be signalled through corresponding side information, i.e. the respective locations of these sub-areas within the picture plane or total picture area can be signalled.
In the embodiments according to Fig. 1A and Fig. 1C no interpolation in vertical direction is necessary. In the embodiment according to Fig. 1A the interpolation in horizontal direction expands 960 pixels to 1920 pixels. In the embodiment according to Fig. 1C the interpolation in horizontal direction expands 640 pixels to 1920 pixels. In the embodiment according to Fig. 1B there is an interpolation in horizontal direction expanding 960 pixels to 1920 pixels as well as an interpolation in vertical direction expanding 540 pixels to 1080 pixels.
The signals corresponding to the areas are encoded (in the studio) into a single video data stream and are decoded in the disc player as a single video data stream using a single video decoder. Upon this decoding a corresponding part of the decoded video signal is interpolated and output or presented or displayed as a full-size video signal, although having reduced horizontal and/or vertical resolution.
Such splitting of the available picture area is in particular advantageous for HDTV resolution pictures which originally have a higher resolution and whereby the interpolation from the smaller area yields a resolution that corresponds to standard TV resolution or even higher.

Selection of the to-be-displayed (partial) signal can be under full control by the user, or may occur programmatically with side information residing on the storage medium or the optical disc.
Normally, only one of the identified different viewing angle video signals is displayed, after upscaling to full screen resolution. However, concurrent display or output of all contained video signals may be used during the selection phase.

It is advantageous to constrain the location of the boundaries of the individual video signal areas to coincide with pixel block or macroblock boundaries that are established when subjecting the joint video signal to compression by a block-oriented codec, because a mix of two video signals with different statistics in one block would lower the compression efficiency. The pixel block size may be e.g. 8*8 or 4*4 pixels and the macroblock size may be 16*16 pixels.
It is furthermore advantageous to constrain motion estimation for a pixel block or macroblock of any of the contributing video signals to a search range within the boundaries (i.e. the area) of this video signal, in order to avoid artefacts due to prediction from a different video signal.

In Fig. 2 a disk drive including a pick-up and an error correction stage PEC reads an encoded video and audio signal from a disc D. The output signal passes through a track buffer and de-multiplexer stage TBM to a video decoder VDEC and an audio decoder ADEC, respectively, which receive corresponding data packets to be decoded. The audio decoder provides one or more decoded audio output signals AO. A controller CTRL can control PEC, TBM, VDEC and ADEC. The video decoder VDEC can be an MPEG-1, -2, -4 or -4AVC video decoder and the audio decoder ADEC can be an AC-3, MPEG or DTS audio decoder. A user interface UI sends viewing angle selection data VAS to the controller CTRL. A default viewing angle selection data item DVAS can be fed from TBM to the controller CTRL. DVAS can include the information about whether or not the main picture is to be presented in upscaled or non-upscaled format or size.
Video decoder VDEC passes the decoded assembled video signal corresponding to the total or full-size picture area to a selection and interpolation stage SELINT in which that part of the decoded video signal corresponding to the desired viewing angle or to the main picture signal is taken from the total decoded video signal and is correspondingly horizontally and/or vertically interpolated or upscaled to a full-size video output signal VO.

It is also possible that the selected viewing angle signal, or the parallel main video signal, is not interpolated or upscaled to full-size but to a smaller size format or its original area-size format, whereby in such case the presentation is preferably centred in the middle of the total picture area.

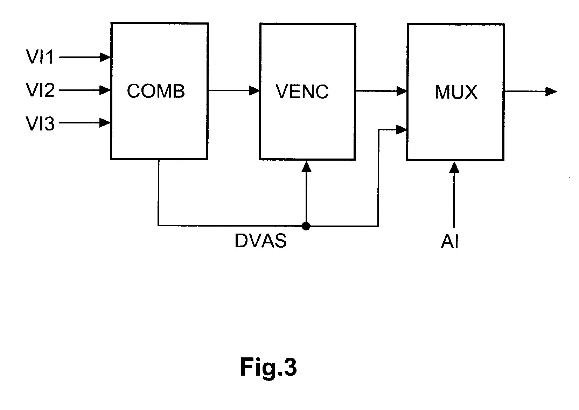

The encoder of Fig. 3 has several video signal inputs and receives at a given time instant one or more video input signals VI1, VI2 and VI3, e.g. a main view video signal and different angle view video signals. These video signals are correspondingly adapted in their size (e.g. by filtering and subsampling) and are combined in a combiner COMB whereby the pixels for each video signal occupy a specific sub area within the full picture. The number and the size or location of these sub areas is fed as a side information DVAS to a video encoder VENC and a multiplexer MUX. The video encoder VENC encodes the combined single video signal. In multiplexer MUX the encoded video signal, the side information and one or more encoded audio input signals AI are assembled a bitstream to be recorded or broadcast.

The invention can be used in different optical or hard disc storage medium systems, e.g. in DVD, HD-DVD and in BD (bluray) .
Instead of a disc player, the invention can also be used in other types of devices, e.g. a digital settop box or a digital TV receiver like DVB, in which case the front-end including the disk drive and the track buffer is replaced by a tuner for digital signals.

## Claims

1. Method for encoding pictures of one or more video signals, **characterised by** the steps:
- if more than one video signal is to be encoded per total picture area, splitting (COMB) the total picture area to be encoded into a corresponding number of sub areas (SA1-SA4) and assigning to each one of said sub areas a different one of said video signals;
- encoding (VENC) the one or more video signals as a single video signal, whereby the resulting code includes data items (DVAS) which signal that the commonly encoded video signal contains one or more video signals, and which signal how many video signals are contained in said commonly encoded video signal.

2. Apparatus for encoding pictures of one or more video signals, said apparatus including:
- means (COMB) being adapted for splitting the total picture area to be encoded into a corresponding number of sub areas (SA1-SA4) and for assigning to each one of said sub areas a different one of said video signals, if more than one video signal is to be encoded per total picture area;
- means (VENC) being adapted for encoding the one or more video signals as a single video signal, whereby the resulting code includes data items (DVAS) which signal that the commonly encoded video signal contains one or more video signals, and which signal how many video signals are contained in said commonly encoded video signal.

3. Method for decoding an encoded video signal that represents one or more video signals, **characterised by** the steps:
- decoding (VDEC) pictures of said encoded video signal whereby, if more than one video signal was encoded per total picture area, prior to the encoding the total picture area was split into a corresponding number of sub areas (SA1-SA4) and to each one of said sub areas a different one of said video signals was assigned and the one or more video signals were encoded as a single video signal, whereby the code of said encoded video signal includes data items (DVAS) which signal that the commonly encoded video signal contains one or more video signals, and which signal how many video signals are contained in said commonly encoded video signal;
- selecting (SELINT) one of said one or more video signals that is related to one of said sub areas;
- outputting the selected decoded video signal (VO).

4. Apparatus for decoding an encoded video signal that represents one or more video signals, said apparatus including:
- means (VDEC) being adapted for decoding pictures of said encoded video signal whereby, if more than one video signal was encoded per total picture area, prior to the encoding the total picture area was split into a corresponding number of sub areas (SA1-SA4) and to each one of said sub areas a different one of said video signals was assigned and the one or more video signals were encoded as a single video signal, whereby the code of said encoded video signal includes data items (DVAS) which signal that the commonly encoded video signal contains one or more video signals, and which signal how many video signals are contained in said commonly encoded video signal;
- means (SELINT) being adapted for selecting one of said one or more video signals that is related to one of said sub areas, said selecting means outputting the selected decoded video signal (VO).

5. Method according to claim 1 or 3, or apparatus according to claim 2 or 4, wherein the location of the boundaries of said sub areas (SA1-SA4) in said total picture area coincides with pixel block or macroblock boundaries.

6. Method according to one of claims 1, 3 and 5, or apparatus according to one of claims 2, 4 and 5, wherein for a motion estimation for a pixel block or macroblock of any of the contributing video signals is constrained to a search range within the boundaries of the corresponding sub area.

7. Method according to one of claims 1, 3, 5 and 6, or apparatus according to one of claims 2 and 4 to 6, wherein said data items, or other data items, included in said commonly encoded video signal relate to information about the location of said sub areas (SA1-SA4) in said total picture area.

8. Method according to one of claims 1, 3 and 5 to 7, or apparatus according to one of claims 2 and 4 to 7, wherein said one or more video signals represent a main video signal and multi-angle views of said main video signal.

9. Method according to one of claims 1, 3 and 5 to 8, or apparatus according to one of claims 2 and 4 to 8, wherein said data items (DVAS) include an information about which one of said video signals in said sub areas is to be selected as a default.

10. Method according to one of claims 3 and 5 to 9, or apparatus according to one of claims 4 to 9, wherein upon selection of one of said video signals it is automatically interpolated (SELINT) or upscaled to the full size corresponding to said total picture area.

11. Method according to one of claims 3 and 5 to 10, or apparatus according to one of claims 4 to 10, wherein one of said video signals is selected by corresponding user input data (VAS).

12. Method or apparatus according to claim 10, wherein before selection of one of said video signals all video signals are displayed or presented for a user.
